# DEMANDE DE BREVET EUROPEEN

(11) **EP 2 436 580 A2**
(43) Date de publication de la demande: **04.04.2012**
(21) Numéro de dépôt: 11306149.3
(22) Date de dépôt: 15.09.2011
(51) Int. Cl.: B62D 35/00, B62D 37/02, B62D 65/02, B62D 65/16

(54) **Ensemble aérodynamique pour porte de coffre de véhicule automobile**

(30) Priorité: 04.10.2010 FR 1058015
(71) Demandeur: Renault S.A.S., 92100 Boulogne-Billancourt (FR)
(72) Inventeur: Quevilly, Eric, 78370 Plaisir (FR)

(57) **Abrégé**

L'invention concerne un ensemble aérodynamique (10) destiné à être fixé sur une porte (20) de coffre d'un véhicule automobile, caractérisé en ce que l'ensemble aérodynamique (10) comprend plusieurs parties distinctes dont un premier élément central (11) est conformé pour épouser la partie supérieure (22) de la porte de coffre (20), et deux éléments latéraux additionnels (16), situés dans la continuité de l'élément central (11) à chacune de ses extrémités, sont conformés pour épouser au moins en partie les côtés de la porte de coffre (20), l'ensemble aérodynamique (10) comprenant au moins un moyen de fixation (18), notamment à vis, écrou ou clip, entre d'une part l'élément central (11) et la porte de coffre (20), et d'autre part chaque élément latéral additionnel (16) et la porte de coffre (20).

L'invention concerne également une porte de coffre adaptée pour recevoir un tel ensemble aérodynamique et le procédé de montage de l'ensemble aérodynamique sur la porte.

## Description

L'invention concerne un ensemble aérodynamique destiné à être fixé sur une porte de coffre d'un véhicule automobile, la porte de coffre adaptée pour recevoir un tel ensemble aérodynamique et le procédé de montage de l'ensemble aérodynamique sur la porte.

Dans un véhicule automobile, on peut chercher à ajouter des éléments aérodynamiques afin d'améliorer l'esthétisme et/ou les performances du véhicule.

On sait installer sur une chaine de fabrication, de façon simple et réversible, un élément aérodynamique simple qui comprend une partie sensiblement horizontale, l'élément épousant la partie supérieure de la porte de coffre.

Pour installer une pièce aérodynamique plus complexe qui présente notamment une forme de U épousant la partie supérieure de la porte de coffre et au moins en partie les cotés de la porte de coffre, on réalise un ensemble monobloc que l'on vient coller sur la porte de coffre. La forme complexe génère des opérations de positionnement avant le collage de la pièce qui oblige à sortir le véhicule de la chaine de montage et à le faire passer dans un atelier spécialisé. L'ajout d'une telle pièce limite donc la cadence de production de la chaine de montage tout en générant une augmentation du coût de production. De plus, l'utilisation de la colle fait qu'après séchage de cette dernière, toute opération ultérieure devient coûteuse et compliquée.

On cherche donc à proposer une pièce aérodynamique complexe aisée à mettre en oeuvre sur une chaine de montage de véhicule automobile.

A cet effet, il est proposé un ensemble aérodynamique destiné à être fixé sur une porte de coffre d'un véhicule automobile, caractérisé en ce que l'ensemble aérodynamique comprend plusieurs parties distinctes dont un premier élément central est conformé pour épouser la partie supérieure de la porte de coffre, et deux éléments latéraux additionnels, situés dans la continuité de l'élément central à chacune de ses extrémités, sont conformés pour épouser au moins en partie les côtés de la porte de coffre, l'ensemble aérodynamique comprenant au moins un moyen de fixation, notamment à vis, écrou ou clip, entre d'une part l'élément central et la porte de coffre, et d'autre part chaque élément latéral additionnel et la porte de coffre.

Un tel ensemble aérodynamique, formé de plusieurs éléments et assemblé par un moyen de fixation réversible, facilite considérablement la mise en oeuvre sur un véhicule automobile et peut donc permettre d'intégrer cet ensemble aérodynamique sur une chaine de fabrication.

Le moyen de fixation réversible pourrait être un clip, appartenant à l'ensemble aérodynamique, que l'on viendrait clipper dans un orifice correspondant de la porte de coffre.

Le moyen de fixation réversible pourrait également être une vis qui traverserait un orifice correspondant de l'ensemble aérodynamique et qui viendrait se visser dans un orifice correspondant de la porte de coffre.

Le moyen de fixation pourrait également comprendre un ensemble de vis et/ou de clips.

Avantageusement, l'ensemble aérodynamique peut comprendre au moins un moyen de centrage conformé pour coopérer avec la porte de coffre afin de positionner l'ensemble aérodynamique sur la porte de coffre dans une position prédéterminée.

L'utilisation d'un moyen de centrage peut notamment permettre d'obtenir un bon positionnement géométrique de l'ensemble sur la porte de coffre.

En particulier, chaque élément peut comprendre au moins un moyen de centrage, favorisant non seulement le bon positionnement de l'ensemble aérodynamique sur la porte de coffre, mais également le positionnement des éléments entre eux. Une pluralité de moyens de centrage peut également permettre de maitriser les jeux d'assemblage et d'aspect entre les éléments et la porte de coffre.

En particulier, le moyen de centrage est un orifice ou une partie saillante conformée pour coopérer avec une partie saillante ou un orifice correspondant prédéterminé faisant partie de la porte de coffre.

La partie saillante peut notamment se présenter sous la forme d'un pion en forme de croix qui peut notamment permettre un centrage en Y et un centrage en Z de l'élément central sur la porte de coffre.

L'axe X est défini comme étant celui allant dans le sens de marche du véhicule, l'axe Y est défini comme allant de la gauche du véhicule vers la droite et l'axe Z est défini comme allant du bas du véhicule vers le haut du véhicule. Ces définitions sont également valables pour la suite de cette description.

Avantageusement, l'ensemble aérodynamique peut comprendre des moyens d'indexation et/ou de solidarisation entre l'élément central et les éléments latéraux.

Avantageusement, chaque élément de l'ensemble aérodynamique est formé d'un support de fixation et d'un élément d'habillage ou peau. L'élément aérodynamique est solidarisé sur la porte de coffre par l'intermédiaire des supports de fixation. Le positionnement et la fixation peuvent ainsi être aisément réalisés, les supports de fixation ainsi que les moyens de fixation étant ensuite cachés et protégés par la peau, laquelle participe à l'aérodynamisme de l'ensemble.

Un élément d'habillage pourra être prévu pour chaque support de fixation d'un élément de l'ensemble aérodynamique, mais on pourrait également prévoir un unique élément d'habillage recouvrant les trois supports de fixation.

L'invention concerne également une porte de coffre d'un véhicule automobile comprenant au moins un moyen de centrage conformé pour coopérer avec un ensemble aérodynamique en plusieurs parties tel que décrit précédemment afin de positionner ce dernier sur la porte de coffre dans une position prédéterminée.

Les moyens de centrage, de la porte et/ou de l'ensemble aérodynamique, peuvent également servir de moyen de solidarisation de l'ensemble aérodynamique sur la porte de coffre. Un tel ensemble peut notamment permettre d'avoir une résistance aux forces importantes, notamment lorsque l'ensemble aérodynamique est soumis au contraintes de flux d'air lors du déplacement du véhicule ou encore aux contraintes subies lors d'un lavage dans une station de lavage avec des rouleaux.

Plus particulièrement, la porte peut comprendre une structure et une lunette arrière, la structure étant conformée pour recevoir la lunette arrière, caractérisée en ce que le moyen de centrage appartient à la lunette.

Le positionnement du moyen de centrage sur la lunette peut notamment permettre d'utiliser une structure de porte traditionnelle et de n'avoir à changer que la lunette lorsque l'on veut adapter l'ensemble aérodynamique sur un véhicule.

Avantageusement, le moyen de centrage peut être une partie saillante ou un orifice conformé pour coopérer avec un orifice ou une partie saillante correspondant prédéterminé faisant partie de l'ensemble aérodynamique.

L'invention concerne aussi le procédé de montage d'un ensemble aérodynamique tel que décrit ci-dessus sur une porte de coffre telle que décrite ci dessus, le procédé comprenant les étapes suivantes :
- le positionnement de l'élément central au niveau de la partie supérieure de la porte de coffre,
- la solidarisation de l'élément central avec la porte de coffre par un moyen de fixation réversible,
- le positionnement des éléments latéraux au niveau des cotés de la porte de coffre,
- la solidarisation des éléments latéraux avec les cotés de la porte de coffre.

La solidarisation peut notamment s'effectuer par des moyens de fixation réversible tels que des clips ou des vis.

En outre, le procédé de montage peut comprendre une étape d'indexation et/ou de solidarisation des éléments latéraux avec l'élément central.

Cette étape additionnelle, réalisé par clipage ou vissage, peut notamment permettre d'assurer une bonne rigidité de l'ensemble aérodynamique et d'uniformiser les jeux entre les éléments.

En particulier, les éléments comprenant chacun un support de fixation, le procédé de montage peut comprendre une étape de recouvrement des supports par au moins une peau.

Une telle étape peut notamment permettre de parfaire l'ensemble aérodynamique et lui conférer de meilleures performances de pénétrations dans l'air.

L'invention concerne également un véhicule automobile comprenant une porte arrière avec un ensemble aérodynamique tel qu'ils sont décrits ci dessus.

Un véhicule équipé d'un tel ensemble aérodynamique pourrait favoriser sa pénétration dans l'air et ainsi limiter de façon non négligeable ses émissions polluantes.

L'invention est maintenant décrite en faisant référence au dessin annexé, non limitatif, dans lequel :

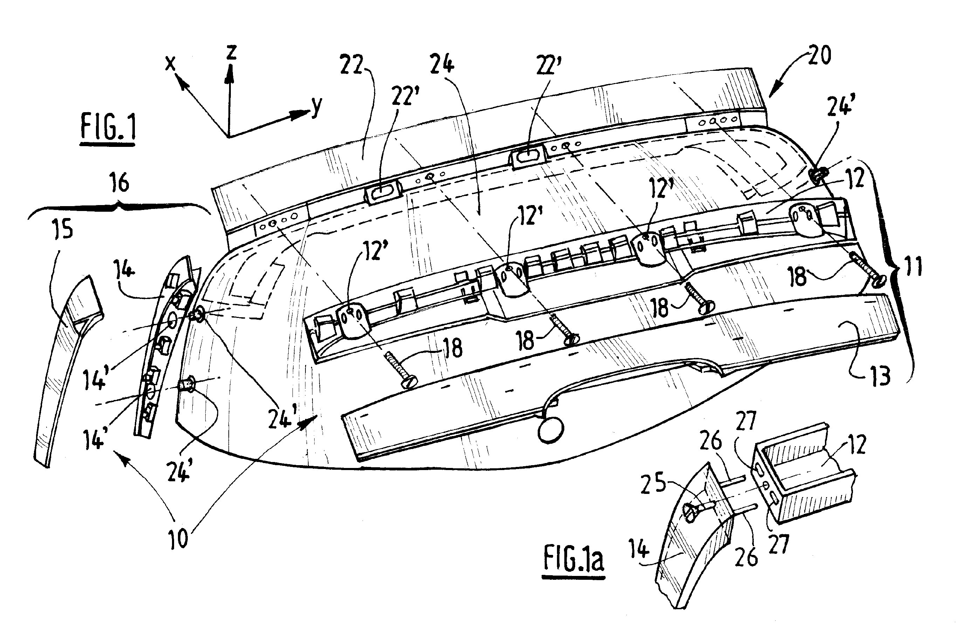

La figure 1 est une vue éclatée d'un ensemble aérodynamique sur une porte de coffre d'un véhicule automobile selon l'invention, et
La figure 1a est une vue détaillée de l'assemblage entre les supports de fixation 12 et 14.

La description ci-après est faite en référence à un repère orthonormé classique dans lequel X représente la direction longitudinale avant-arrière du véhicule, Y la direction transversale au véhicule et Z la direction verticale.

La figure 1 représente plus particulièrement un ensemble aérodynamique 10 comprenant un premier élément central 11 conformé pour épouser la partie supérieure de la structure 22 de la porte de coffre 20 d'un véhicule, typiquement à l'arrière du véhicule.

L'ensemble aérodynamique 10 comprend deux éléments latéraux 16, situés dans le prolongement de l'élément central 11, conformés pour épouser au moins en partie la lunette arrière 24 du véhicule. Les éléments latéraux 16 sont des pièces distinctes de l'élément central 11, disposées aux extrémités de l'élément central 11 lors de l'assemblage sur la porte de coffre.

Dans l'exemple représenté, chaque élément 11, 16 est formé d'un support de fixation 12, 14 et d'un élément d'habillage 13, 15 ou peau. Ainsi, l'élément central 11 est formé d'un support de fixation 12 et d'une peau 13, et les éléments latéraux 16 sont formés chacun d'un support de fixation 14 et d'une peau 15.

Dans cet exemple, les supports de fixation et les peaux associées sont des pièces distinctes. On pourrait toutefois envisager qu'ils soient reliés entre eux, par exemple par une ou plusieurs charnières, ou bien qu'ils soient réalisés d'une pièce par moulage, une partie formant charnière les reliant.

Pour faciliter la compréhension de la figure 1 nous n'avons représenté qu'un seul élément latéral, l'autre élément latéral étant placé sur le coté opposé de la lunette arrière.

La lunette arrière 24 est solidarisée sur la structure 22 de la porte de coffre 20 du véhicule par un moyen traditionnel, c'est-à-dire généralement par un joint.

Le positionnement et la fixation du support de fixation 12 de l'élément central 11 sur la partie supérieure 22 est assuré par au moins un moyen de fixation réversible, typiquement un ensemble de quatre vis 18, les vis traversant des orifices 12' du support de fixation 12 de l'élément central 11 pour venir se visser dans la structure 22, ou dans des écrous prisonniers de la structure 22.

Un ensemble de quatre vis permet d'assurer un bon maintien du support de fixation 12 de l'élément central 11 sur la structure mais on pourrait également envisager de n'en disposer que deux, ou alors un plus grand nombre, notamment en fonction de la longueur de l'élément à fixer.

On pourrait également envisager de remplacer les vis par des clips ou par d'autres éléments de fixation réversible.

On pourrait également envisager au moins un pion de positionnement appartenant au support de fixation 12 de l'élément central 11 et qui viendrait se positionner en vis-à-vis d'un orifice correspondant appartenant à la structure 22. Plus particulièrement, le pion pourrait être un pion en croix permettant un centrage en Y et en Z du support de fixation 12 de l'élément central 11 sur la structure 22.

Le positionnement des supports de fixation 14 des éléments latéraux 16 s'effectue par l'intermédiaire de pions 24' collés sur la lunette arrière 24. Ces pions 24' sont collés sur la lunette 24 lors d'une précédente opération de montage que nous ne détaillerons pas ici.

Dans notre exemple, les pions sont collés sur la lunette mais on pourrait également envisager d'avoir des écrous soudés sur la structure de la porte de coffre, en regard d'orifices réalisés dans la lunette, et qui viendraient recevoir des vis traversant la lunette pour la solidarisation des supports de fixation des éléments latéraux.

On pourrait également envisager d'avoir des goujons (ou pions) soudés sur la structure de la porte de coffre.

Les pions 24' coïncident avec des orifices 14', réalisés dans les supports de fixation 14 des éléments latéraux 16, et permettent d'assurer le positionnement en X et en Y des supports de fixation 14 des éléments latéraux 16.

Selon un autre mode de réalisation non représenté, on pourrait envisager que les parties saillantes (ou pion) appartiennent aux supports de fixation des éléments latéraux et viennent coïncider avec des orifices réalisés préalablement dans la lunette.

On pourrait également envisager que les deux solutions soient réalisées simultanément, les supports de fixation des éléments latéraux et chaque coté de la lunette portant alors respectivement chacun un pion et un orifice.

La solidarisation des supports de fixation 14 des éléments latéraux 16 s'effectue également par l'intermédiaire des pions 24'. A cet effet, ces derniers sont par exemple filetés et permettent, après avoir positionné les supports de fixation 14 des éléments latéraux 16, de visser un écrou qui vient alors plaquer les supports de fixation 14 des éléments latéraux 16 sur la lunette 24.

L'ensemble aérodynamique 10 est complété par l'intermédiaire de moyens de fixation permettant de relier les supports de fixation 14 des éléments latéraux 16 au support de fixation 12 de l'élément central 11. La fixation peut notamment être assurée par vissage ou clipage.

Par exemple, et comme représenté sur la figure 1a, on pourrait envisager au moins un et avantageusement au moins deux pions 26, appartenant au support de fixation 14, conformés pour s'insérer dans des orifices correspondants 27, appartenant au support de fixation 12. Un tel ensemble peut notamment permettre d'assurer l'indexation entre les éléments 12 et 14. Afin d'assurer la solidarisation entre les éléments 12 et 14, on peut ajouter un moyen de fixation 25, par exemple une vis, par exemple située entre les deux pions 26.

Par indexation on comprend que les éléments sont positionnés de façon optimale entre eux, permettant notamment de respecter les jeux d'assemblage et d'aspect entre les différents éléments.

En variante, les pions peuvent être solidaires du support de fixation 12 et coopérer avec des orifices correspondants prévus sur le support de fixation 14.

En outre, les supports de fixation 12 de l'élément central 11 et les supports de fixation 14 des éléments latéraux 16 sont recouverts d'une peau 13, 15, respectivement, permettant d'une part de cacher les moyens de positionnement et de solidarisation de l'ensemble aérodynamique et d'autre part de parfaire le profil aérodynamique de l'ensemble.

Ces peaux 13, 15 peuvent notamment être solidarisées par clipage ou vissage sur leurs éléments respectifs.

Nous allons maintenant décrire, de façon non limitative, un procédé de montage, qui peut notamment comprendre les étapes suivantes :
- Le positionnement du support de fixation 12 de l'élément central 11 au niveau de la partie supérieure de la structure 22 de la porte de coffre 20, notamment par l'intermédiaire d'un pion en forme de croix, non représenté, assurant le positionnement en Y et en Z de l'élément 14 sur la structure supérieure 22,
- La solidarisation du support de fixation 12 de l'élément central 11 sur la partie supérieure de la structure 22 par l'intermédiaire de quatre vis 18, assurant le maintien de l'élément central 11 sur la structure 22,
- Le positionnement des supports de fixation 14 des éléments latéraux 16 en positionnant les orifices 14' en regard des pions 24' appartenant à la lunette 24, assurant le positionnement en X et en Z des éléments latéraux 14 sur la lunette 24,
- La solidarisation des supports de fixation 14 des éléments latéraux 16 sur la lunette 24 en vissant des écrous sur les pions 24', assurant le maintien des éléments 14 sur la lunette 24.

En outre, le procédé de montage peut également comprendre l'étape suivante :
- La solidarisation des supports de fixation 14 des éléments latéraux 16 avec le support de fixation 12 de l'élément central 11 par l'intermédiaire d'un moyen de solidarisation réversible tel qu'une vis ou un clip.

Cette étape de solidarisation peut être réalisée après l'étape de solidarisation des supports de fixation 14 sur la lunette 24.

Cette étape peut également, et de préférence, être réalisée préalablement à l'étape de solidarisation des supports de fixation 14 sur la lunette 24. Elle peut notamment permettre de maitriser l'espacement entre les supports de fixation 14 et le support de fixation 12. Il peut alors être nécessaire de prévoir que les orifices 14' soient oblongs afin de faciliter le positionnement des supports de fixation 14 sur les pions 24'.

Le procédé de montage peut également comprendre une étape intermédiaire, préalable au positionnement des éléments latéraux, permettant d'assurer un jeu de fonctionnement de la porte, l'étape consistant dans :
- Le positionnement d'un moyen d'écartement sur les supports latéraux, le moyen d'écartement pouvant être un jeu de cales d'épaisseur déterminée, permettant d'assurer un espacement suffisant nécessaire à la fermeture de la porte de coffre sans que les éléments latéraux n'entrent en contact avec la structure du véhicule.

Le procédé de montage peut également comprendre des étapes de mise en place d'élément de fonctionnement du véhicule tel que par exemple le tuyau d'amenée du liquide lave glace sur la lunette ou encore le câblage électrique du troisième feu stop. Le tuyau et/ou le câble arrivent originellement par les orifices 22' réalisés dans la structure. Il suffit alors de connecter les extrémités du tuyau et/ou du câble, par exemple par l'intermédiaire de moyen de connexion adapté, aux éléments de fonctionnement du véhicule décrits ci-dessus qui auront été assemblés au préalable sur l'élément central. Cette étape de raccordement des connectiques peut s'effectuer de préférence avant le positionnement du support de fixation 12 sur la partie supérieure de la structure 22.

Lorsque les éléments 11, 16 de l'ensemble aérodynamique 10 sont formés d'une seule pièce, par exemple par moulage, le procédé de montage peut être similaire au procédé de montage des supports de fixation 12, 14.

Le procédé de montage peut comprendre une étape supplémentaire consistant à recouvrir les supports de fixation 12, 14 des éléments centraux et latéraux comprenant :
- Le positionnement d'une peau 13 en vis-à-vis du support de fixation 12 de l'élément central 11,
- La solidarisation de la peau 13 sur le support de fixation 12 de l'élément central 11,
- Le positionnement des peaux 15 en vis-à-vis des supports de fixation 14 des éléments latéraux 16, et
- La solidarisation des peaux 15 sur les supports de fixation 14 des éléments latéraux 16.

Le positionnement des peaux 13, 15 peut être favorisé par des pions de positionnement, solidaires des peaux 13, 15 ou des supports de fixation 12, 14 des éléments 11, 16, les pions étant conformés pour se positionner dans des orifices correspondants appartenant aux peaux 13, 15 ou aux supports de fixation 12, 14 des éléments 11, 16.

La solidarisation des peaux 13, 15 peut être réalisée par l'intermédiaire de clips ou de vis. On peut notamment prévoir un dispositif de vissage des peaux qui ne pourrait se réaliser qu'une fois la porte de coffre ouverte, ce qui permettrait de limiter le vol de ces éléments.

Il existe également un procédé de démontage de l'ensemble aérodynamique qui reprend les étapes inverses des étapes de montage.

## Revendications

1. Ensemble aérodynamique (10) destiné à être fixé sur une porte (20) de coffre d'un véhicule automobile, **caractérisé en ce que** l'ensemble aérodynamique (10) comprend plusieurs parties distinctes dont un premier élément central (11) est conformé pour épouser la partie supérieure (22) de la porte de coffre (20), et deux éléments latéraux additionnels (16), situés dans la continuité de l'élément central (11) à chacune de ses extrémités, sont conformés pour épouser au moins en partie les côtés de la porte de coffre (20), l'ensemble aérodynamique (10) comprenant au moins un moyen de fixation (18), notamment à vis, écrou ou clip, entre d'une part l'élément central (11) et la porte de coffre (20), et d'autre part chaque élément latéral additionnel (16) et la porte de coffre (20).

2. Ensemble aérodynamique (10) selon la revendication 1, **caractérisé en ce qu'**il comprend au moins un moyen de centrage (14') conformé pour coopérer avec la porte de coffre (20) afin de positionner l'ensemble aérodynamique (10) sur la porte de coffre (20) dans une position prédéterminée.

3. Ensemble aérodynamique selon la revendication 2, **caractérisé en ce que** le moyen de centrage (14') est un orifice ou une partie saillante conformée pour coopérer avec une partie saillante (24') ou un orifice correspondant prédéterminé faisant partie de la porte de coffre (20).

4. Ensemble aérodynamique selon l'une quelconque des revendications 1 à 3, **caractérisé en ce qu'**il comprend des moyens d'indexation et/ou de solidarisation entre l'élément central (11) et les éléments latéraux (16).

5. Ensemble aérodynamique selon l'une quelconque des revendications 1 à 4, **caractérisé en ce que** l'élément central (11) est formé d'un support de fixation (12) et d'une peau (13), et les éléments latéraux (16) sont formés chacun d'un support de fixation (14) et d'une peau (15), l'élément aérodynamique (10) étant solidarisé sur la porte de coffre (20) par l'intermédiaire des supports de fixation (12, 14).

6. Porte de coffre (20) d'un véhicule automobile comprenant au moins un moyen de centrage (24') conformé pour coopérer avec un ensemble aérodynamique (10) en plusieurs parties (11, 16) selon l'une des revendications 1 à 5, afin de positionner ce dernier sur la porte de coffre (20) dans une position prédéterminée.

7. Porte de coffre (20) selon la revendication 6, la porte comprenant une structure (22) et une lunette arrière (24), la structure (22) étant conformée pour recevoir la lunette arrière (24), **caractérisée en ce que** le moyen de centrage (24') appartient à la lunette (24).

8. Porte de coffre (20) selon l'une des revendications 6 ou 7, **caractérisée en ce que** le moyen de centrage (24') est une partie saillante ou un orifice conformé pour coopérer avec un orifice (14') ou une partie saillante correspondant prédéterminé faisant partie de l'ensemble aérodynamique (10).

9. Procédé de montage d'un ensemble aérodynamique (10) selon l'une des revendications 1 à 5 sur une porte de coffre (20) selon l'une des revendications 6 à 8, le procédé comprenant les étapes suivantes :
- le positionnement de l'élément central (11) au niveau de la structure supérieure (22) de la porte de coffre (20),
- la solidarisation de l'élément central (11) avec la porte de coffre par un moyen de fixation réversible (18),
- le positionnement des éléments latéraux (16) au niveau des cotés de la porte de coffre (20),
- la solidarisation des éléments latéraux (16) avec les cotés de la porte de coffre (20).

10. Procédé de montage selon la revendication 9, comprenant en outre une étape d'indexation et/ou de solidarisation des éléments latéraux (16) avec l'élément central (11).

11. Véhicule automobile comprenant une porte de coffre selon l'une des revendications 6 à 8, la porte comprenant un ensemble aérodynamique selon l'une des revendications 1 à 5.
